# EUROPÄISCHE PATENTSCHRIFT

(11) **EP 1 196 697 B1**
(45) Veröffentlichungstag und Bekanntmachung des Hinweises auf die Patenterteilung: **28.04.2004**
(21) Anmeldenummer: 00953069.2
(22) Anmeldetag: 19.07.2000
(51) Int. Cl.: F16G 11/00

(54) **SEILVERBINDERVORRICHTUNG**
ROPE CONNECTING DEVICE
DISPOSITIF DE MANCHONS DE JONCTION

(30) Priorität: 21.07.1999 DE 19934240
(43) Veröffentlichungstag der Anmeldung: 17.04.2002
(73) Patentinhaber: CARL STAHL GMBH, D-73079 Süssen (DE)
(72) Erfinder: FUNK, Wolfgang, D-73072 Donzdorf (DE)
(74) Vertreter: Bartels, Martin Erich Arthur
(86) Internationale Anmeldenummer: PCT/EP2000/006874
(87) Internationale Veröffentlichungsnummer: WO 2001/007797

(56) Entgegenhaltungen:
- DE-A- 3 412 054
- FR-A- 478 603
- FR-A- 2 760 051
- GB-A- 769 646
- US-A- 3 111 060
- US-A- 3 784 026
- US-A- 4 771 516

## Beschreibung

Die Erfindung betrifft eine Seilverbindervorrichtung mit den Merkmalen des Oberbegriffes des Patentanspruches 1.

Das Problem der Herstellung einer mechanisch stark belastbaren, unlösbaren Verbindung von Seilen bzw. Seilabschnitten stellt sich in unterschiedlichen Anwendungsbereichen von Seilkonstruktionen. So kann beispielsweise zur Herstellung einer Öse am Ende eines z.B. für Hebe- oder Spannzwecke vorgesehenen Stahlseils das Ende des die Öse bildenden Seilabschnittes an das Seil angelegt und mit diesem mittels einer Preßklemme oder Preßhülse verbunden werden. Seilverbinder in Form von Preßhülsen werden auch zur Bildung von Verbindungsstellen von flächig ausdehnbaren flexiblen Netzanordnungen mit an den Verbindungsstellen miteinander verbundenen Seilabschnitten verwendet. Derartige bevorzugt mit Edelstahlseilen und Preßhülsen aus verzinktem Kupfer hergestellte flexible Stahlseilnetze bieten eine Vielzahl von Anwendungsmöglichkeiten, insbesondere für Architektur, Design oder Messebau, und können durch flächige, gegebenenfalls komplex aufgebaute Netze mit unterschiedlichster Krümmung zur Herstellung von ästhetisch ansprechenden Konstruktionen verwendet werden. Nur beispielhaft seien hier Zäune, Gitter, Sicherungsnetze, Geländer, Sitz- und/oder Lehnflächen von Sitzmöbeln oder andere Tragwerksund/oder Haltestrukturen befestigbare Netze erwähnt. Besonders bei diesen Anwendungen werden hohe Ansprüche sowohl an die mechanische Belastbarkeit der Seilverbindung als auch an deren optisches Erscheinungsbild gelegt. Neben der Einschränkung der gestalterischen Freiheit durch die im wesentlichen vorgegebene Form der angesprochenen Preßhülsen ergibt sich darüber hinaus bei den vorgefertigten, an sich geschlossenen Hülsen zusätzlich das Problem des Auffädelns auf die entsprechenden Seilabschnitte, was grundsätzlich die Montage erschwert und zeitlich aufwendig werden läßt.

Aus der DE-OS 34 12 054 sind Seilverbinder auf diesem Gebiet bekannt in Form von einteiligen Klemmhülsen, die beidseitig mit umlenkbaren Klammerabschnitten versehen sind. Nach Aufnahme der zusammenzuführenden Seilabschnitte in die Klemmhülse werden die Klammerabschnitte aufeinander zuführend umgelenkt und anschließend derart verpreßt, daß eine Verbindung von Seilabschnitten mit Klemmhülse gegeben ist. Gegenüber den vorstehend beschriebenen Preßhülsen hat die dahingehend ausgebildete Klemmhülse als Seilverbinder den Vorteil, daß sie sich an beliebig vorgebbaren Stellen der Seilkonstruktion für einen Verbindungsvorgang festlegen und derart anbringen läßt. Da die Klammerabschnitte zu ihrem freien Ende hin in eine Abschlußkante auslaufen, ist nicht auszuschließen, daß die dahingehende Kante beim Herstellen der Klemmhülse in das Seilmaterial der zusammenzuführenden Seilabschnitte eindringt und derart diese schädigt. Darüber hinaus ist der Handhabungsaufwand zum Herstellen der Klemmhülse entsprechend hoch, so daß die Herstellung der Seilverbindung insgesamt teuer ist.

Durch die US 4,771,516 ist es Stand der Technik, Seilverbinder mit halbschalenförmigen Verbindungsteilen zu versehen, die zwischen sich die Seilabschnitte aufnehmen und die mittels einer Schnapp- oder Rastverbindung miteinander verbindbar sind. Da hierbei regelmäßig die beiden zu verbindenden Seilabschnitte in unmittelbarer Anlage miteinander sind, kann derart kein vollständiger Kraft- oder Reibschluß zwischen den Seilen erreicht werden mit der Folge, daß der Seilverbinder sich von seiner vorgegebenen Stelle löst und die gewünschte oder benötigte Verbindung zwischen den Seilabschnitten freigibt. Demgemäß sieht die bekannte Vorrichtung bei einer bevorzugten Ausführungsform weitere Mittel zur Rutschsicherung vor etwa in Form von spitzen Dornen, die im Innenraum der Seilverbinder angebracht in das Seilmaterial eindringen und dieses derart verletzen. Unabhängig hiervon ist jedenfalls vorgesehen, innerhalb des Seilverbinders vorzugsweise eine Verbindungsschraube derart vorzusehen, daß die Schraube beide aneinanderliegende Seilabschnitte durchgreift und diese derart innerhalb des Seilverbinders festlegt. Es wird also jedenfalls bewußt eine Schädigung der miteinander zu verbindenden Seilabschnitte in Kauf genommen, um zu einer verläßlichen Seilverbindung zu gelangen.

Durch die GB 769 646 A ist eine Seilverbindervorrichtung bekannt zum Festklemmen von Seilabschnitten eines Rolladenzuges, bei dem die Seilabschnitte über einen Seilverbinder mit zwei Verbindungsteilen festgelegt sind. Hierfür weist das eine Verbindungsteil im wesentlichen U-förmig verlaufende Wandabschnitte auf, die über einen Mittensteg des einen Verbindungsteils voneinander räumlich getrennt sind, wobei für einen Festlegevorgang der zugehörigen Seilabschnitte diese zwischen dem Mittensteg und dem jeweils zugeordneten Wandabschnitt klemmend festgelegt sind. Der Mittensteg selbst weist in seiner Mitte wiederum eine Ausnehmung auf, die von einem Festlegedorn durchgreifbar ist, der an seinem freien Ende mit einem Verrastungsteil als Bestandteil einer Klippverbindung versehen ist, die als weiteren komplementären Teil im Inneren der Mittenausnehmung gleichfalls ein Rastteil vorsieht. Im verrasteten Zustand endet das freie Ende des Festlegedornes im wesentlichen überstandsfrei an einer Außenfläche des einen Verbindungsteils mit den Wandabschnitten. Durch Trennen der Rast- oder Klippverbindung läßt sich der bekannte Seilverbinder über seine Verbindungsteile leicht und rasch trennen, so daß eine hoch belastbare Verbindung von Seilen und/oder Seilabschnitten miteinander nicht möglich ist. Aufgrund des genannten Mittensteges mit Ausnehmung, in die der Festlegedorn eingreift, baut darüber hinaus die bekannte Lösung auch konstruktiv groß auf.

Durch die US-A-3 784 026 ist eine weitere Seilverbindervorrichtung bekannt zum Festlegen von paarweise an mindestens einer Verbindungsstelle zusammengeführten Seilabschnitten mindestens eines Seiles, wobei die jeweilige Verbindungsstelle über einen Seilverbinder gebildet ist, der mindestens zwei Verbindungsteile aufweist, die mittels eines Art Druckknopfes gleichfalls in der Art einer lösbaren Rastverbindung die Verbindung der beiden Verbindungsteile herstellt. Der eigentliche Druckknopf ist Bestandteil eines der beiden Verbindungsteile, die jeweils mit ihren einander zugewandten Wandflächen nach außen Kanäle begrenzen für die Aufnahme der miteinander zu verbindenden Seilabschnitte. Der genannte Druckknopf ist des weiteren in einer zugeordneten zylindrischen Ausnehmung eines Aufnahmeteils im korrespondierenden einen Verbindungsteil verrastbar. Da die dahingehende Verbindung sich im übrigen leicht lösen läßt, schlägt darüber hinaus die bekannte Lösung vor, zum Herstellen einer festen Verbindung zwischen den beiden Verbindungsteilen diese über eine Nietverbindung miteinander zu verbinden, die den Druckknopf durchgreift. Diese bekannte Lösung baut wiederum geometrisch groß auf und die Außenumfangswand des zylindrischen Aufnahmeteils befindet sich in unmittelbarer Anlage mit den aufgenommenen Seilabschnitten in den Kanalführungen zwischen den Verbindungsteilen. Um die lose aufgenommenen Seilabschnitte definiert im Seilverbinder festlegen zu können, weist zumindest ein Teil dieser Seilabschnitte außerhalb der Seilverbindervorrichtung eine Längshülse aus elastisch nachgiebigem Material auf, die zum einen die Abstützung zwischen einander benachbart gegenüberliegenden Seilabschnitten vornimmt und zum anderen aufgrund ihrer Materialeigenschaft eine Art Stopperfunktion realisiert, bei der die Relativbewegung zwischen den benachbarten Seilabschnitten innerhalb der Seilverbindervorrichtung wenigstens teilweise gehemmt ist. Mit der bekannten Druckknopflösung für eine Seilverbindervorrichtung ist mithin eine funktionssichere und hoch belastbare Verbindung von Seilen und deren Abschnitten nicht möglich.

Durch den nächstkommenden Stand der Technik in Form der FR 478 603 ist ein gattungsgemäßer Seilverbinder bekannt, bei dem die beiden Verbindungsteile in Form zweier flächenförmiger Klammerteile ausgebildet sind, die zwischen sich die W-förmig verlaufenden Seilabschnitte aufnehmen, wobei bei hergestellter Verbindung über einen Niet die randseitigen Bereiche der Seilabschnitte nach außen hin aus der Seilverbindervorrichtung heraus ins Freie münden und im übrigen gegen die Wandabschnitte des Seilverbinders gepreßt sind. Der angesprochene Niet wird als Klemmelement zwischen die im Verbinder aufgenommenen Seilabschnitte hindurchgedrückt und durchgreift beide Verbindungsteile in deren mittig angeordneten Ausnehmungen und der jeweils endseitig angeordnete Nietkopf liegt randseitig auf den Verbindungsteilen auf und hält bei hergestellter Nietverbindung die Verbindungsteile derart klemmend aneinander, daß auf die Seilabschnitte selbst eine Klemmkraft ausgeübt ist. Für die Realisierung dieser bekannten Seilverbindervorrichtung sind eine Vielzahl von voneinander unabhängiger Bauteile notwendig, was die Herstellung aufwendig und mithin teuer macht. So muß insbesondere beim Herstellen der Nietverbindung an jedem Ende des Nietes ein Nietkopf angeformt und in Anlage mit den Verbindungsteilen gebracht werden. Im übrigen stehen die Nietköpfe deutlich über die Verbindungsteile hervor, so daß die bekannte Seilverbindervorrichtung geometrisch groß aufbaut und den Seilverbinder selbst auch unschön aussehen läßt. Durch die vorstehend angeordneten Nietköpfe besteht darüber hinaus die Gefahr, daß diese durch Fremdeinwirkung beschädigt werden und mithin abreißen können. Dies ist gleichzusetzen mit einem Versagen der gesamten Verbindung.

Ausgehend von diesem Stand der Technik liegt der Erfindung die Aufgabe zugrunde, eine Seilverbindervorrichtung zu schaffen, die eine formschöne Ausgestaltung von Seilkonstruktionen erlaubt, die geometrisch klein aufbaut und dennoch eine funktionssichere und hoch belastbare Verbindung von Seilen und Seilabschnitten ermöglicht. Eine dahingehende Aufgabe löst eine Seilverbindervorrichtung mit den Merkmalen des Anspruches 1.

Dadurch, daß gemäß dem kennzeichnenden Teil des Anspruches 1 der Niet Bestandteil eines der beiden Verbindungsteile ist und daß das freie Ende des Nietes bei hergestellter Nietverbindung mit seinem Kopfteil in einen erweiterten Aufnahmeraum, der an die Ausnehmung angrenzt, eingreift, kann auf einen Nietkopf völlig verzichtet werden und der andere Nietkopf ist derart in den erweiterten Aufnahmeraum integrierbar, daß ohne größeren Überstand der Nietkopf integrierter Bestandteil des anderen Verbindungsteils ist. Da der Nietkopf in den erweiterten Aufnahmeraum schützend integriert ist, ist eine Beschädigung von außen kaum möglich, so daß auch im Alltagsbetrieb unter erschwerten Bedingungen eine lang andauernde sichere Seilverbindung erreicht ist. Letzteres spielt insbesondere dann eine Rolle, wenn die erfindungsgemäße Seilverbindervorrichtung in sicherheitstechnisch relevanten Bereichen eingesetzt wird.

Des weiteren ist es mit der erfindungsgemäßen Seilverbindervorrichtung mit ihren hohen Klemmkräften möglich, ohne weitere zusätzliche Eingriffsmittel, wie Festlegeschrauben oder Festlegedorne, auszukommen, um eine sichere, lang andauernde Verbindung der Seilabschnitte oder Seile miteinander zu gewährleisten. Da keine zusätzlichen Eingriffsmittel zum Herstellen der Verbindung notwendig sind, ist auch eine Schädigung der Seile oder Seilabschnitte selbst ausgeschlossen, was wiederum der Funktionstüchtigkeit der Seilverbindervorrichtung zugute kommt. Ferner kann die erfindungsgemäße Seilverbindervorrichtung mit den Seilverbindern an jeder beliebigen Stelle der Netzkonstruktion angebracht werden, um derart platzsparend die zusammenzuführenden Seilabschnitte miteinander zu verbinden.

Bei einer bevorzugten Ausführungsform der erfindungsgemäßen Seilverbindervorrichtung ist der Niet einstückiger Bestandteil des einen Verbindungsteiles des Seilverbinders. Dadurch läßt sich dieses Verbindungsteil mit dem Niet auf einfache Weise, beispielsweise als Preßteil, herstellen. Grundsätzlich ist aber auch eine mehrteilige Form des dahingehenden Verbindungsteils denkbar, bei der beispielsweise der Niet in Form einer Schraube oder eines Schraubenbolzens mit dem Verbindungsteil verbunden ist.

Bei einer weiteren bevorzugten Ausführungsform der erfindungsgemäßen Seilverbindervorrichtung füllt der Kopfteil des Nietes nach dem Herstellen der Nietverbindung den Aufnahmeraum aus und bildet im wesentlichen überstandsfrei mit einer Außenfläche des anderen Verbindungsteils eine gemeinsame Ebene aus. Dadurch läßt sich der Seilverbinder in der Art einer Scheibe mit geringen konstruktiven Aufbaumaßen ausbilden. Ferner gibt sich durch den Eingriff des Kopfteils in den Aufnahmeraum eine im wesentlichen sowohl form- als auch kraftschlüssige Verbindung mit dem anderen Verbindungsteil des Seilverbinders.

Bei einer weiteren besonders bevorzugten Ausführungsform der erfindungsgemäßen Seilverbindervorrichtung weist das andere Verbindungsteil einen Grundkörper mit zwei den Grundkörper nach außen hin begrenzenden Wandabschnitten auf, die zwischen sich einen ins Freie mündenden Kanal begrenzen, der für die Aufnahme der Seilabschnitte zwei Kanalabschnitte aufweist und der senkrecht zum Niet angeordnet ist. Durch die genannten, nach außen hin den Grundkörper begrenzenden Wandabschnitte ist sichergestellt, daß im Bereich der Verbindungsstelle die zusammengeführten und im Seilverbinder aufgenommenen Seilabschnitte nach außen hin abgeschlossen im Seilverbinder aufgenommen sind, so daß insofern eine Beschädigung durch Fremdeinwirkung von außen ausgeschlossen ist.

Bei einer weiteren bevorzugten Ausführungsform der erfindungsgemäßen Seilverbindervorrichtung ist vorgesehen, daß die Kanalabschnitte des anderen Verbindungsteils bei hergestellter Nietverbindung durch den Niet des einen Verbindungsteils voneinander getrennt sind. Vorzugsweise ist dabei ferner vorgesehen, daß in die Kanalabschnitte eingebrachte Seilabschnitte durch die Formgebung der Wandabschnitte und des Nietes mehrfach umgelenkt im Seilverbinder gehalten sind. Durch die dahingehende Merkmalsausgestaltung wird jeder Seilabschnitt innerhalb des Seilverbinders in der Art eines W's geführt, wobei die damit in Verbindung stehende Mehrfachumlenkung zu erhöhten Festlegekräften im Seilverbinder führt, was noch dadurch weiter begünstigt ist, daß der Niet zwischen die beiden Seilabschnitte im Bereich des mittleren W-Bogens eines jeden Abschnittes eingreift.

Bei einer weiteren bevorzugten Ausführungsform der erfindungsgemäßen Seilverbindervorrichtung weist das eine Verbindungsteil einen Abschlußdeckel zur Auflage auf entsprechende Auflageflächen der Wandabschnitte des Grundkörpers des anderen Verbindungsteils auf, so daß gegenüber einer ersten Klemmrichtung innerhalb des Kanals des Seilverbinders eine zweite quer dazu verlaufende Klemmrichtung mit hinzukommt, wobei die dahingehende Klemmkraft über den Abschlußdeckel auf die Seilabschnitte wirksam aufgebracht ist.

Mithin sind beim Zusammenführen der beiden Verbindungsteile und Herstellen der Nietverbindung die Seilabschnitte klemmend in den Kanalabschnitten des Seilverbinders festgelegt.

Bei einer weiteren bevorzugten Ausführungsform der erfindungsgemäßen Seilverbindervorrichtung ist der Kopfteil des Nietes des einen Verbindungsteils vor dem Herstellen der Nietverbindung derart in einer kegelstumpfartigen Form mit abgerundeter Spitze ausgebildet, daß er gegenüber dem anderen Verbindungsteil einen vorgebbaren Überstand aufweist. Hierdurch läßt sich das eine Verbindungsteil besonders einfach mit dem anderen zusammenführen, da der Kopfteil zunächst zwischen die beiden Seilabschnitte an der Verbindungsstelle führend hindurchgreift, um dann ohne Verkanten durch die Ausnehmung in den Aufnahmeraum einzugreifen. Anschließend kann sofort in dieser vorjustierten Lage die Nietverbindung fertiggestellt werden.

Bei einer weiteren besonders bevorzugten Ausführungsform der erfindungsgemäßen Seilverbindervorrichtung ist durch das Festlegen mehrerer Seilabschnitte an mehreren Verbindungsstellen mittels Seilverbindern eine flexible Netzanordnung herstellbar, mit der sich auch komplexe, flächige Strukturen realisieren lassen.

Im folgenden wird die erfindungsgemäße Seilverbindervorrichtung anhand der Zeichnung näher erläutert. Es zeigen in prinzipieller und nicht maßstäblicher Darstellung die
- Fig.1: eine Draufsicht auf eine Ausführungsform eines eben aufgespreizten, flexiblen Stahlseilnetzes, bei dem die Stahlseile zur Bildung von Verbindungsstellen des Netzes mit einer Ausführungsform einer erfindungsgemäßen Seilverbindervorrichtung verbunden sind;
- Fig.2: eine vergrößerte Darstellung des umkeisten Bereichs 2 in Fig.1 mit einer Seilverbindervorrichtung im teilweisen Schnitt parallel zur Netzebene und mit eingeklemmten Seilabschnitten;
- Fig.3: einen Schnitt durch eine Seilverbindervorrichtung der in den Fig.1 und 2 gezeigten Art senkrecht zur Durchlauffläche der Seilabschnitte;
- Fig.4: eine Draufsicht auf die Oberseite des anderen Verbindungsteils einer Ausführungsform einer Seilverbindervorrichtung;
- Fig.5: einen Schnitt durch das Verbindungsteil in Fig.4 entlang der Linie V - V;
- Fig.6: einen Schnitt durch das Verbindungsteil in Fig.4 entlang der Linie VI - VI;
- Fig.7: eine Unteransicht des einen Verbindungsteils des Seilverbinders und die
- Fig.8: eine Seitenansicht des Verbindungsteils aus Fig.7.

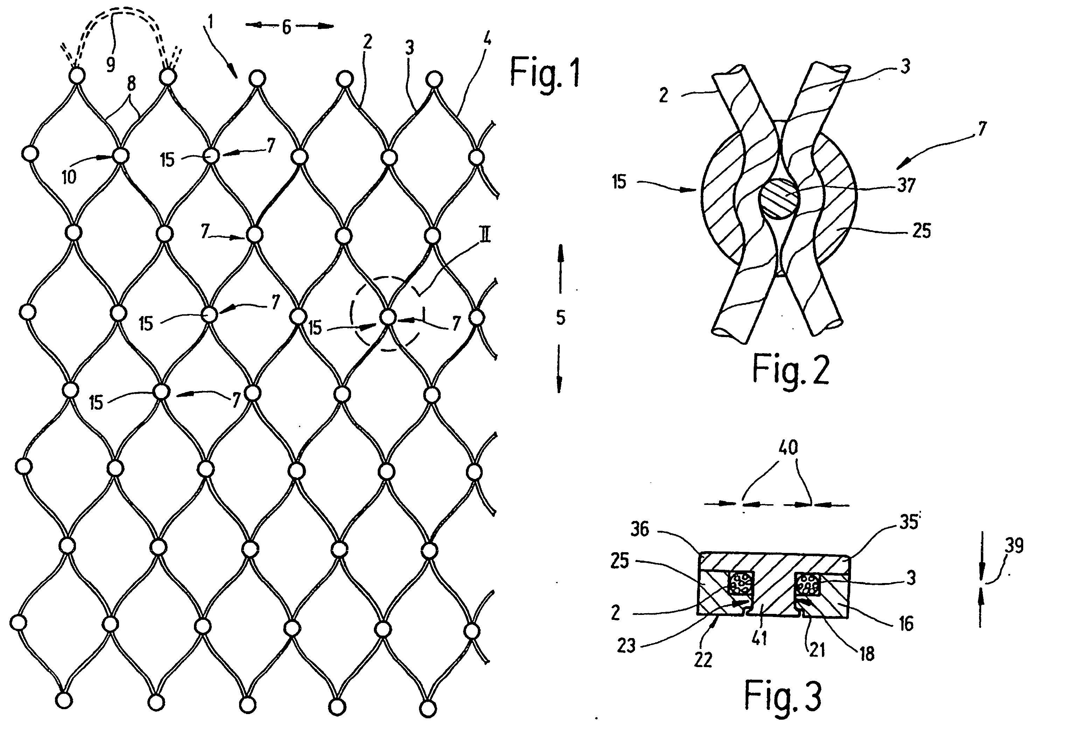

Die Draufsicht in Fig.1 zeigt ein flexibles Stahlseilnetz 1, das eine Vielzahl gleichartiger, in einer gemeinsamen Netzfläche angeordnete Drahtseile 2 bis 4 aufweist, die sich generell in Längsrichtung 5 des Netzes nebeneinander liegend erstrecken, wobei in Querrichtung 6 der Netzanordnung benachbarte Seile bzw. Seilabschnitte im Bereich von Verbindungsstellen 7 miteinander verbunden sind. Dabei ist jedes im Inneren der Netzanordnung liegende Drahtseil 3 in Längsrichtung abwechselnd einmal mit dem Nachbarseil 2 zur einen Seite und danach mit dem Nachbarseil 4 an der gegenüberliegenden Seite verbunden. In Seillängsrichtung aufeinanderfolgende Verbindungsstellen 7 haben einen auch als Maschenweite bezeichneten Längsabstand, der je nach gewünschter Charakteristik des Netzes im wesentlichen frei wählbar ist und beispielsweise zwischen 20 und 150 mm, insbesondere bei ca. 30, 60 oder 120 mm, liegen kann. Typische Seilstärken bzw. Seildurchmesser können zwischen ca. 0,4 und ca. 12 mm liegen. Bei den Seilen handelt es sich bevorzugt um Litzen- und Rundlitzenseile in Edelstahl und verzinkt. Die Seile können gegebenenfalls ummantelt bzw. beschichtet sein, beispielsweise mit einer gegen UV-Strahlung resistenten Polyamidummantelung. Die durch parallelogrammförmige bzw. rautenförmige Maschen gebildete Netzanordnung ist besonders in Querrichtung 6 auf ein Vielfaches ihrer bei im wesentlichen parallelen Seilen vorliegenden Breite elastisch dehnbar sowie als Ganzes flächig flexibel, so daß neben ebenen Bespannungen auch gegebenenfalls komplex gekrümmte Netzflächen realisierbar sind. Am Beispiel des Drahtseiles 8 in Fig.1 ist verdeutlicht, daß beispielsweise zur Bildung einer Netzrandschlaufe 9, die zur Befestigung des Netzes an einem durch die Schlaufe 9 geführten Träger genutzt werden kann, auch benachbarte Seilabschnitte desselben Seils an einer Verbindungsstelle 10 verbunden sein können.

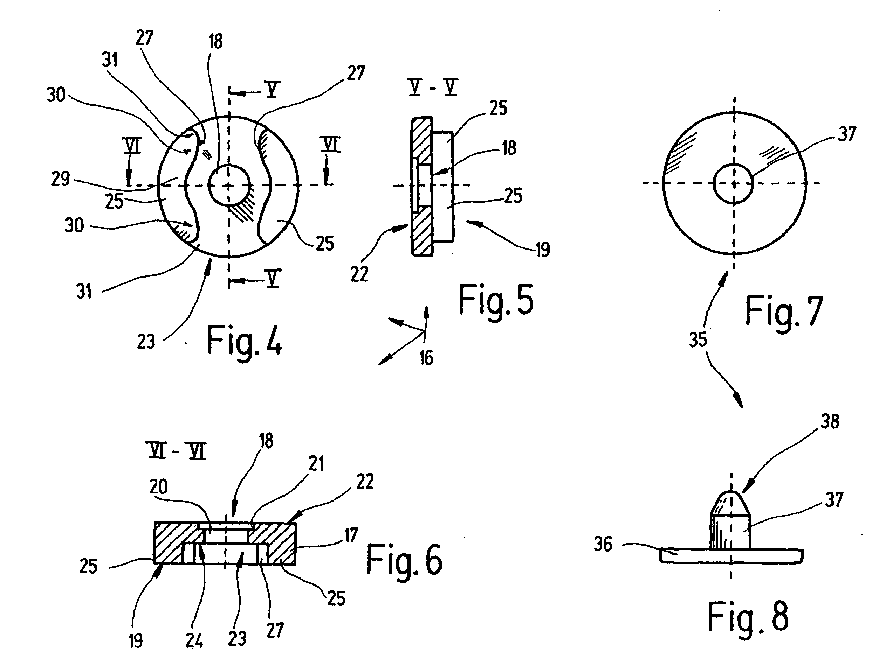

Zur unlösbaren, mechanisch hoch belastbaren Verbindung benachbarter Seile bzw. Seilabschnitte ist eine in den Fig.2 bis 8 im Detail dargestellte Seilverbindervorrichtung mit einem zweiteiligen Seilverbinder 15 vorgesehen, deren Teile aus korrosions- und alterungsbeständigem Edelstahl bestehen. Im verbundenen Zustand ihrer Verbindungsteile 16, 35 haben die flachen Seilverbinder eine Dicke, die weniger als das Dreifache der Seilstärke beträgt, so daß die Netzanordnung auch im Bereich ihrer Verbindungsstellen 7 so flach ist, daß sie z.B. als Bespannung für eine Sitz- oder Lehnfläche eines Stuhls od. dgl. verwendet werden kann. Ein besonders in den Fig. 4 bis 6 gut erkennbares anderes Verbindungsteil 16 hat einen Verbindungsteilkörper 17 mit der Grundform einer flachen, kreisrunden Scheibe, deren Dicke etwa dem Doppelten der Seilstärke der aufzunehmenden Seile entspricht. Eine zentrische, senkrecht zur Scheibenebene verlaufende Ausnehmung 18 weist einen zylindrisch geformten Abschnitt 20 auf, der unter Ausbildung einer Ringschulter in einen erweiterten Aufnahmeraum 21 an der Verbindungsteil-Unterseite 22 übergeht. An der Verbindungsteil-Oberseite 19 ist ein diametral durchgehender Kanal 23 vorgesehen, in dessen ebenen Kanalgrund 24 die Ausnehmung 18 mündet. Der Kanal wird an seinen Längsseiten durch zwei spiegelsymmetrisch zu einer Symmetrieebene des Verbindungsteils 16 angeordnete, in Draufsicht mondförmige oder bananenförmige Wandabschnitte 25 begrenzt, deren einander zugewandten Innenflächen 27 senkrecht zum Kanalgrund 24 und in Längsrichtung des Kanals 23 etwa wie ein abgerundet geschwungenes W gekrümmt verlaufen. Dadurch hat der Kanal 23 einen im Bereich der Ausnehmung 18 liegenden, nach außen bauchig erweiterten Verbreiterungsabschnitt 29, an den sich zu beiden Seiten Engstellen 30 anschließen, die nach außen in trichterförmig erweiterte Endabschnitte 31 übergehen. Die in Längsrichtung des Kanals 23.kontinuierlich und stufenlos variierende Breite des Kanals ist an den schmalsten Stellen 30 geringfügig größer als die Summe der Seilstärken der aufzunehmenden Seilabschnitte, so daß diese bequem und zunächst ohne Zusammenpressung von oben in den Kanal 23 eingelegt werden können. Im Bereich der Ausnehmung 18 ist der minimale Radialabstand zwischen Ausnehmungsrand und den Innenflächen 27 der Wandabschnitte 25 etwa 5 bis 10 % kleiner als der Seildurchmesser. Die vom Kanalgrund 24 gemessene Höhe der an ihrer Oberseite ebenen Wandabschnitte 25 ist ca. 5 bis 10 % kleiner als der Seildurchmesser der zugeordneten Seilabschnitte, so daß diese im eingelegten (unverformten) Zustand geringfügig über den Kanal hinausragen.

Das besonders in den Fig.7 und 8 gut zu erkennende eine Verbindungsteil 35 hat die Grundform eines Flachkopfnietes mit stark verbreitertem grundscheibenförmigen Flachkopfabschnitt 36 und einem zentrischen, zylindrischen Niet 37, der sich an seinem dem Flachkopfabschnitt abgewandten Ende zunächst kegelig und anschießend unter Bildung eines abgerundeten Kopfteils 38 kalottenförmig verjüngt. Dieses als einstückiges Edelstahl-Drehteil herstellbare eine Verbindungsteil 35 ist den Dimensionen des anderen Verbindungsteils 16 und der der aufzunehmenden Seilabschnitte so angepaßt, daß der Durchmesser des Flachkopfabschnittes 36 im wesentlichen dem Durchmesser des Verbindungsteilgrundkörpers 17 entspricht, daß der zylindrische Niet 37 bequem und gegebenenfalls mit geringem Spiel in die Ausnehmung 18 einsteckbar ist und daß der Niet 37 so lang ist, daß der verjüngte Kopfteil aus der Rückseite des Verbindungsteilgrundkörpers 17 hinausragt, wenn der Flachkopfabschnitt 36 auf der Oberseite der Wandabschnitte 25 aufliegt. Der Durchmesser des Nietes 37 ist so bemessen, daß bei zusammengesteckten Verbindungsteilen 16,35 ein minimaler Radialabstand zwischen dem Niet 37 und einer diesem zugewandten, gleichsinnig gekrümmten Innenseite 27 eines Wandabschnittes 25 zwischen ca. 2 % und ca. 20 %, insbesondere zwischen ca. 5 % und ca. 10 % kleiner ist als der Durchmesser eines eingelegten Seilabschnittes, so daß dieser zwischen dem Niet 37 und dem Wandabschnitt 25 eingeklemmt wird.

Die Herstellung einer Seilverbindung zwischen paarweise zusammengeführten Seilabschnitten unter Verwendung dieser Ausführungsform eines Seilverbinders kann dabei folgendermaßen durchgeführt werden.
Bei abgenommenem einen Verbindungsteil 35 werden zunächst die miteinander und mit dem Seilverbinder zu verbindenden Teilabschnitte im wesentlichen parallel zueinander verlaufend in den Kanal 23 eingelegt. Alternativ kann natürlich bei unbewegten und beispielsweise festgespannten Seilabschnitten das andere Verbindungsteil 16 unter Einführung der Seilabschnitte in den Kanal 23 an die Seilabschnitte herangeführt werden. Das Einlegen ist bequem und weitgehend ohne Verhakung der Seilabschnitte an dem anderen Verbindungsteil 16 möglich, weil die schmalsten Stellen 30 des Kanals 23 geringfügig breiter sind als die Gesamtbreite der eng beieinanderliegenden, einander gegebenenfalls berührenden Seilabschnitte. Anschließend wird das eine Verbindungsteil 16 mit dem Niet 37 voraus von der Seite der Kanalöffnung her aufgedrückt. Dabei wird der Niet 37 zwischen den Seilen hindurchgedrückt, bis der Kopfabschnitt 38 des Nietes die Seile passiert hat und durch die Ausnehmung 18 hindurchgesteckt ist. Dabei sorgt die abgerundete Spitze sowohl für eine zerstörungsfreie, seilschonende Einführung des Nietes zwischen die Seile, als auch für eine sichere Seilführung in die Ausnehmung 18. Die Seile werden dank der durch die Kegelflächen des Kopfteiles ausgeübten Keilwirkung seitlich, d.h. senkrecht zur Eindrückrichtung in die Innenradien der Wandabschnitte 25 gedrückt. Da deren Abstand zur gerundeten Außenseite des Nietes im engsten Bereich geringer ist als die Seildicke, werden die Seile beim Eindrückvorgang in radialer Richtung bzw. parallel zum Kanalgrund in einer zweiten Klemmrichtung 40 (Fig.3) schonend eingeklemmt. Der Niet 37 wirkt damit als Klemmelement mit den Wandabschnitten zusammen. Weiterhin ergibt sich eine Verbiegung der Seilabschnitte in Form eines abgerundeten geschwungenen W's symmetrisch zueinander, wodurch eine zuverlässige Verrutschsicherung bzw. Auszugssicherung in Seillängsrichtung gefördert wird (Fig.2).

Da die Wandabschnitte 25 niedriger sind als die eingelegten Seile, liegt beim Einschubvorgang zunächst der Flachkopfabschnitt 36 auf den Seilen auf und es besteht ein geringer Abstand, typischerweise in der Größenordnung von Zehntel Millimetern, zwischen dem Flachkopfabschnitt 36 und den Wandabschnitten 25. In diesem Stadium werden die Verbindungsteile 16,35 durch eine im wesentlichen parallel zur Nietlängsrichtung verlaufende Kraft zusammengedrückt, bis der Flachkopfabschnitt 36 fest auf den Wandabschnitten 25 aufliegt. Durch diesen Aufpreßvorgang werden die Seile nun auch in einer ersten Klemmrichtung 39 (Fig.3) im wesentlichen senkrecht zum Kanalgrund und senkrecht zur zweiten Klemmrichtung eingeklemmt, so daß insgesamt eine starke, aber schonende Einklemmung der Seile aus mehreren im Winkel zueinander stehenden Richtungen quer zur Seillängsachse erfolgt. Gleichzeitig oder anschließend an diesen Klemmvorgang wird der über die Rückseite des anderen Verbindungsteils 16 hinausragende Kopfteil 38 mittels eines geeigneten Werkzeuges und geeigneter Krafteinwirkung, beispielsweise durch einen Schlag mit einem geeigneten Nietwerkzeug, derartig plastisch verformt, daß sich ein verbreiterter Schaftabschnitt oder Schließkopf 41 bildet, dessen Durchmesser größer ist als der Durchmesser des zylindrischen Abschnittes 20 der Ausnehmung 18, so daß der durch das eine Verbindungsteil 35 gebildete Niet 37 das andere Verbindungsteil 36 von dessen Unterseite her hintergreift (Fig.3). Das Volumen des zur plastischen Verformung vorgesehenen Kopfteils kann so bemessen sein, daß der Schließkopf 41 nach Verformung den erweiterten Aufnahmeraum 21 weitgehend ausfüllt und nicht über die Außenseite des anderen Verbindungsteils 16 hinausragt. Gegebenenfalls kann in einem Nachbearbeitungsschritt ein eventuell überstehender Rest durch Schleifen od. dgl. abgetragen werden, so daß die nietabgewandte Schließkopffläche vorzugsweise bündig mit der Verbindungsteil-Unterseite 22 abschließt (Fig.3). Durch die bei der Bildung des Schließkopfes 41 auf den Niet wirkende Kraft kann zweckmäßig der Niet auch so weit gestaucht werden, bis sich sein Durchmesser verbreitert und der zylindrische Abschnitt 20 vollständig ausgefüllt ist. Hierdurch ist zusätzlich zur formschlüssigen Sicherung durch den Schließkopf 41 eine feste, spielfreie Kraftschlußverbindung zwischen beiden Verbindungsteilen 16,35 des Seilverbinders 15 geschaffen.

Die Verbindungsherstellung erfolgt zweckmäßig maschinell, insbesondere wenn, wie bei der gezeigten Netzanordnung, in kurzer Zeit eine Vielzahl von Verbindungen in fest vorgebbarer geometrischer Verteilung herzustellen ist. Es ist gegebenenfalls auch möglich, handgehaltene und/oder handbetätigbare Werkzeuge, z.B. nach Art von Zangen, zu verwenden, die an die Form der Verbinderteile angepaßt sind.

Wie erwähnt, handelt es sich bei der beschriebenen bevorzugten Ausführungsform bei den Seilen und Litzen um mehrdrähtige Seile aus verzinkten Drähten und Edelstahldrähten, und die Verbindungsteile 16,35 können ebenfalls aus verzinktem Material oder Edelstahlmaterial sein. Dadurch können Seilstrukturen, beispielsweise nach Art des in Fig.1 gezeigten Netzes, mit dauerhaft ansprechendem Äußeren und hervorragender mechanischer Belastbarkeit geschaffen werden. Im Rahmen der Erfindung ist es auch möglich, Seile mit nur einer einzigen, geeignet festen, flexiblen und/oder verformbaren Faser geeigneter Dicke zu verwenden. Alternativ oder zusätzlich zu Seilen aus metallischen Werkstoffen können auch solche aus Kunststoff oder anderen nichtmetallischen Materialien und/oder gegebenenfalls Materialkombinationen erfindungsgemäß verbunden werden.

Anstelle eines einzigen Nietes können mehrere Niete und entsprechend auch mehrere Ausnehmungen an dem einen und/oder anderen Verbindungsteil vorgesehen sein. Darüber hinaus können mehrere Aufnahmekanäle an einem der Verbindungsteile vorgesehen sein. Erfindungsgemäße Seilverbinder können bei geeigneter Gestaltung dazu verwendet werden, mehr als zwei Seile miteinander zu verbinden. Es ist möglich, erfindungsgemäße Seilverbindervorrichtungen nur an einem einzigen Seil zu befestigen und/oder die Seilverbinder zur Befestigung mindestens eines Seiles an einer Tragestruktur od. dgl. beispielsweise hakenartig auszubilden, so daß mit Hilfe eines Seilverbinders ein Seil an einer Tragestruktur od. dgl. befestigbar ist.

## Patentansprüche

1. Seilverbindervorrichtung zum Festlegen von paarweise an mindestens einer Verbindungsstelle (7) zusammengeführten Seilabschnitten (2,3) mindestens eines Seils (1), wobei die jeweilige Verbindungsstelle (7) über einen Seilverbinder (15) gebildet ist, der mindestens zwei Verbindungsteile (16,35) aufweist, die mittels eines Nietes (37) einer Nietverbindung miteinander verbindbar sind, wobei der Niet (37) zumindest teilweise eines der beiden Verbindungsteile (16) entlang einer Ausnehmung (18) durchgreift und wobei der Niet (37) als Klemmelement zwischen die Seilabschnitte (2,3) hindurchdrückbar ist und diese dergestalt gegen die zuordenbaren Wandabschnitte (25) des einen Verbindungsteils (16) pressen kann dass eine Verbiegung der Seilabschnitte in zueinander symmetrischer W-Form erreichbar ist, **dadurch gekennzeichnet, daß** der Niet (37) Bestandteil des jeweils anderen Verbindungsteils (35) ist und daß das freie Ende des Nietes (37) bei hergestellter Nietverbindung mit seinem Kopfteil (38) in einen erweiterten Aufnahmeraum (21), der an die Ausnehmung (18) angrenzt, eingreift.

2. Seilverbindervorrichtung nach Anspruch 1, **dadurch gekennzeichnet, daß** der Niet (37) einstückiger Bestandteil des anderen Verbindungsteils (35) des Seilverbinders (15) ist.

3. Seilverbindervorrichtung nach Anspruch 1 oder 2, **dadurch gekennzeichnet, daß** der Kopfteil (38) des Nietes (37) nach dem Herstellen der Nietverbindung den Aufnahmeraum (21) ausfüllt und im wesentlichen überstandsfrei mit einer Außenfläche des einen Verbindungsteils (16) eine gemeinsame Ebene ausbildet.

4. Seilverbindervorrichtung nach einem der Ansprüche 1 bis 3, **dadurch gekennzeichnet, daß** das eine Verbindungsteil (16) einen Grundkörper (17) mit zwei den Grundkörper (17) nach außen hin begrenzenden Wandabschnitten (25) aufweist, die zwischen sich einen ins Freie mündenden Kanal (23) begrenzen, der für die Aufnahme der Seilabschnitte (2,3) zwei Kanalabschnitte aufweist und der senkrecht zum Niet (37) angeordnet ist.

5. Seilverbindervorrichtung nach Anspruch 4, **dadurch gekennzeichnet, daß** die Kanalabschnitte des einen Verbindungsteils (16) bei hergestellter Nietverbindung durch den Niet (37) des anderen Verbindungsteils (35) voneinander getrennt sind.

6. Seilverbindervorrichtung nach einem der Ansprüche 4 oder 5, **dadurch gekennzeichnet, daß** in die Kanalabschnitte eingebrachte Seilabschnitte (2,3) durch die Formgebung der Wandabschnitte (25) und des Nietes (37) mehrfach umgelenkt im Seilverbinder (15) gehalten sind.

7. Seilverbindervorrichtung nach einem der Ansprüche 4 bis 6, **dadurch gekennzeichnet, daß** das andere Verbindungsteil (35) einen Abschlußdeckel zur Auflage auf entsprechende Auflageflächen der Wandabschnitte (25) des Grundkörpers (17) des einen Verbindungsteils (16) aufweist.

8. Seilverbindervorrichtung nach einem der Ansprüche 4 bis 7, **dadurch gekennzeichnet, daß** bei Zusammenführen der beiden Verbindungsteile (16,35) und Herstellen der Nietverbindung die Seilabschnitte (2,3) klemmend in den Kanalabschnitten des Seilverbinders (15) festgelegt sind.

9. Seilverbindervorrichtung nach einem der Ansprüche 1 bis 8, **dadurch gekennzeichnet, daß** der Kopfteil (38) des Nietes (37) des anderen Verbindungsteils (35) vor dem Herstellen der Nietverbindung derart in einer kegelstumpfartigen Form mit abgerundeter Spitze vorgesehen ist, daß er gegenüber dem einen Verbindungsteil (16) einen vorgebbaren Überstand aufweist.

10. Seilverbindervorrichtung nach einem der Ansprüche 1 bis 9, **dadurch gekennzeichnet, daß** durch die Festlegung mehrerer Seilabschnitte (2,3) an mehreren Verbindungsstellen (16) mittels Seilverbindern (15) eine flexible Netzanordnung (1) herstellbar ist.

## Claims

1. Rope connecting device for securing rope sections (2, 3) of at least one rope (1) which have been brought together in pairs at at least one connection point (7), wherein each connection point (7) is formed by a rope connector (15) having at least two connecting parts (16, 35) which can be connected to one another by means of a rivet (37) of a rivet connection, wherein the rivet (37) passes at least partially through one of the two connecting parts (16) along a recess (18) and wherein the rivet (37) can be pushed, as a clamping element, between the rope sections (2, 3) and can press the latter against the associable wall sections (25) of the one connecting part (16) in such a manner that bending of the rope sections into a W-shape symmetrical with one another can be achieved, **characterised in that** the rivet (37) is a constituent of the respective other connecting part (35) and **in that** the free end of the rivet (37), when the rivet connection has been produced, engages with its head portion (38) in a widened receiving space (21) adjacent to the recess (18).

2. Rope connecting device according to claim 1, **characterised in that** the rivet (37) is an integral constituent of the other connecting part (35) of the rope connector (15).

3. Rope connecting device according to claim 1 or 2, **characterised in that** the head portion (38) of the rivet (37), after the rivet connection has been produced, fills the receiving space (21) completely and forms a common plane, substantially without overhang, with an outer surface of the one connecting part (16).

4. Rope connecting device according to any one of claims 1 to 3, **characterised in that** the one connecting part (16) has a base body (17) with two wall sections (25) which outwardly delimit the base body (17) and which delimit between them a channel (23) which opens to the open air, which channel (23) has two channel sections for receiving the rope sections (2, 3) and is arranged perpendicular to the rivet (37).

5. Rope connecting device according to claim 4, **characterised in that** the channel sections of the one connecting part (16), when the rivet connection has been produced, are separated from one another by the rivet (37) of the other connecting part (35).

6. Rope connecting device according to either claim 4 or claim 5, **characterised in that** rope sections (2, 3) introduced into the channel sections are held in the rope connector (15) with several changes of direction owing to the shaping of the wall sections (25) and of the rivet (37).

7. Rope connecting device according to any one of claims 4 to 6, **characterised in that** the other connecting part (35) has a cover plate for resting on corresponding support surfaces of the wall sections (25) of the base body (17) of the one connecting part (16).

8. Rope connecting device according to any one of claims 4 to 7, **characterised in that**, when the two connecting parts (16, 35) are brought together and the rivet connection is produced, the rope sections (2, 3) are secured in a clamped manner in the channel sections of the rope connector (15).

9. Rope connecting device according to any one of claims 1 to 8, **characterised in that** the head portion (38) of the rivet (37) of the other connecting part (35), before the rivet connection is produced, is provided in the form of a truncated cone with a rounded tip, in such a manner that it exhibits a specifiable overhang relative to the one connecting part (16).

10. Rope connecting device according to any one of claims 1 to 9, **characterised in that**, by securing a plurality of rope sections (2, 3) at a plurality of connection points (16) by means of rope connectors (15), it is possible to produce a flexible net arrangement (1).

## Revendications

1. Dispositif de manchons de jonction pour fixer par paire des sections de câble (2, 3) assemblées par au moins un câble (1) sur au moins une jonction (7), la jonction (7) respective étant formée via un manchon de jonction (15) qui comporte au moins deux liens (16, 35) pouvant être reliés l'un à l'autre à l'aide d'un rivet (37) dans un assemblage rivé, le rivet (37) traversant au moins partiellement l'un des deux liens (16) le long d'un évidement (18) et moyennant quoi le rivet (37) pouvant être enfoncé entre les sections de câble (2, 3) en tant qu'élément de serrage et pouvant les comprimer contre les sections de paroi (25) associables de l'un des liens (16) de manière à ce qu'il puisse en résulter une déformation des sections de câble symétriques les unes par rapport aux autres formant un W, **caractérisé en ce que** le rivet (37) fait partie respectivement de l'autre lien (35) et **en ce que**, lorsque l'assemblage rivé est créé avec sa tête (38), l'extrémité libre du rivet (37) se met en prise dans un logement élargi (21) adjacent à l'évidemment (18).

2. Dispositif de manchons de jonction selon la revendication 1, **caractérisé en ce que** le rivet (37) est d'un seul tenant avec l'autre lien (35) du manchon de jonction (15).

3. Dispositif de manchons de jonction selon la revendication 1 ou 2, **caractérisé en ce que** la tête (38) du rivet (37) remplit le logement (21) après la création de l'assemblage rivé et forme sensiblement sans porte-à-faux un plan commun avec une surface extérieure de l'un des liens (16).

4. Dispositif de manchons de jonction selon l'une quelconque des revendications 1 à 3, **caractérisé en ce qu'**un lien (16) comporte un corps de base (17) avec deux sections de paroi (25) limitant les corps de base (17) vers l'extérieur et limitant entre elles un canal (23) débouchant dans le vide, lequel canal (23) comporte deux sections de canal pour loger les sections de câble (2, 3) et est disposé à la verticale du rivet (37).

5. Dispositif de manchons de jonction selon la revendication 4, **caractérisé en ce que** les sections de canal de l'un des liens (16) sont séparées les unes des autres par le rivet (37) de l'autre lien (35) lorsque l'assemblage rivé est créé.

6. Dispositif de manchons de jonction selon l'une quelconque des revendications 4 ou 5, **caractérisé en ce que** les sections de câble (2, 3) amenées dans les sections de canal sont maintenues en étant tournées plusieurs fois dans le manchon de jonction (15) par le modelage des sections de paroi (25) et du rivet (37).

7. Dispositif de manchons de jonction selon l'une quelconque des revendications 4 à 6, **caractérisé en ce que** l'autre lien (35) comporte un couvercle de fermeture servant de revêtement sur les surfaces d'appui correspondantes des sections de paroi (25) du corps de base (17) de l'un des liens (16).

8. Dispositif de manchons de jonction selon l'une quelconque des revendications 4 à 7, **caractérisé en ce que** les sections de câble (2, 3) sont fixées en étant grippées dans les sections de canal du manchon de jonction (15) lorsque les deux liens (16, 35) sont assemblés et que l'assemblage rivé est créé.

9. Dispositif de manchons de jonction selon l'une quelconque des revendications 1 à 8, **caractérisé en ce que** la tête (38) du rivet (37) de l'autre lien (35) est pourvue d'une pointe arrondie avant la création de l'assemblage rivé dans une forme tronconique de manière à comporter un porte-à-faux définissable par rapport à l'un des liens (16).

10. Dispositif de manchons de jonction selon l'une quelconque des revendications 1 à 9, **caractérisé en ce que** la fixation de plusieurs sections de câble (2, 3) sur plusieurs jonctions (16) à l'aide de manchons de jonction (15) permet de créer une configuration souple du réseau (1).
